# EUROPEAN PATENT SPECIFICATION

(11) **EP 4 073 501 B1**
(45) Date of publication and mention of the grant of the patent: **25.10.2023**
(21) Application number: 20825018.3
(22) Date of filing: 11.12.2020
(51) Int. Cl.: G01N 27/48, G01N 27/30, G01N 27/38

(54) **ELECTROCHEMICAL SENSOR DEVICE**
ELEKTROCHEMISCHE SENSORVORRICHTUNG
DISPOSITIF CAPTEUR ÉLECTROCHIMIQUE

(30) Priority: 11.12.2019 NL 2024428
(43) Date of publication of application: 19.10.2022
(73) Proprietor: Holland Sensor B.V., 3972 KC Driebergen-Rijsenburg (NL)
(72) Inventor: POOL, Wieberen, 3972 KC Driebergen-Rijsenburg (NL); CHAPMAN, Conrad Scott, 3972 KC Driebergen-Rijsenburg (NL)
(74) Representative: V.O.
(86) International application number: PCT/NL2020/050781
(87) International publication number: WO 2021/118358

(56) References cited:
- US-A- 4 304 853
- US-A1- 2002 112 970
- US-A1- 2005 029 125
- US-A1- 2007 267 291
- US-A1- 2018 252 677
- LAWRENCE N S ET AL: "Electroanalytical applications of boron-doped diamond microelectrode arrays", TALANTA, ELSEVIER, AMSTERDAM, NL, vol. 69, no. 4, 15 June 2006 (2006-06-15), pages 829-834, XP025000877, ISSN: 0039-9140, DOI: 10.1016/J.TALANTA.2005.11.020 [retrieved on 2006-06-15]

## Description

### Field of the inventions

The invention relates to an electrochemical sensor device and a method of performing electrochemical sensing such as anodic stripping voltammetry, or other forms of measurement using an electrochemical sensor device in a flowing liquid.

### Background

Electrochemical sensor devices may be used for scanning voltammetry. Scanning voltammetry involves scanning the voltage applied to a working electrode and measuring the resulting current. Usually, the voltage is applied to the working electrode relative to a reference electrode and the current runs through the working electrode and a counter electrode. For example the reference electrode may be a Ag/AgCl double junction electrode which provides a known and stable redox potential. But in principle the voltage could be applied to the working electrode relative to the counter, in which the reference electrode could be omitted. The electrodes are immersed in a liquid such as water, and the analytical signal is a measurement of current through the working electrode while the voltage is scanned.

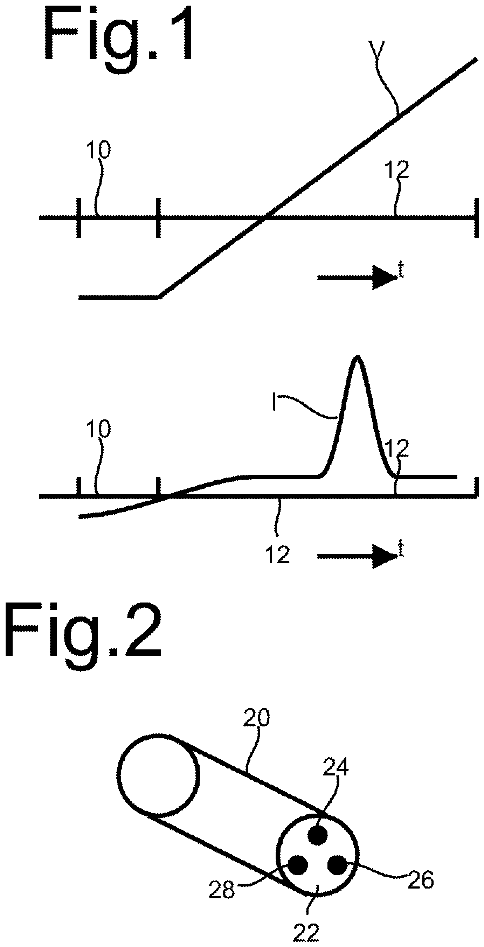

Figure 1 illustrates an example wherein anodic stripping voltammetry is used for measurement of the concentration of silver in water. Figure 1 shows the potential level V of the working electrode and the current I through the working electrode as a function of time. Anodic stripping voltammetry involves a collection time interval 10 wherein a constant potential is applied at the working electrode. In the collection time interval a negative potential is applied which attracts silver ions to the working electrode, which become deposited on the working electrode as neutral silver.

Subsequently, in a stripping time interval 12, the potential on the working electrode is scanned, lowering and reversing the polarity of the potential difference between the working electrode and the counter electrode. This causes the deposited silver on the working electrode to become ions again once a threshold potential difference is reached that is characteristic for silver. This results in a peak in the current to the working electrode during the scan. From the size of this peak the number of ions that have been deposited on the working electrode can be determined. This number depends on the duration of the collection time interval and the ion concentration. Thus for a given duration, the silver concentration can be determined from the size of the peak.

When different species of ions are collected onto the working electrode from the liquid during the collection time interval, these species of ions are released from the working electrode at different threshold potential differences during the scan. However, the window of potential differences wherein such measurements can be performed depends on the material of the electrodes. The window can be made large enough by using a Boron Doped Diamond (BDD) working electrode, that many different species can be measured. Moreover, use of a micro-array working electrode ensures that the background current that is not associated with specific species of ions remains low.

A process of manufacturing BDD micro electrodes is described in an article by C.A. Rusinek et al. titled "Fabrication and characterization of boron doped diamond microelectrode arrays of varied geometry", published in Electrochemistry Communications 73 (2016) 10-14. US8177949 describes an electrochemical sensor device with a working electrode that comprises an array of BDD micro electrodes with 25-50 micrometer diameter. US2005/029125A1 also describes an electrochemical sensor device with a working electrode that comprises an array of BDD micro electrodes. US2002/112970A1 concerns a sensor for electroanalytical measurements. US2007/0267291A1 describes an electrochemical sensor comprising boron doped diamond particles. US4304853 describes some further electrodes.

US2018/0252677A1 discloses a biochemical sensor, wherein a ring shaped counter electrode has a thickness of about 1 mm.

The rate at which such measurements can be repeated is limited by the time needed to recover from the preceding scan and the duration of the collection time interval needed to obtain a sufficient number of deposited ions for the desired accuracy.

### Summary

Among others, it is an object to increase the rate at which scanning voltammetry can be reliably performed. In addition the sensitivity of such measurements may be increased.

An electrochemical sensor device according to independent claim 1 is provided that comprises
- a sensing surface;
- a working electrode on the sensing surface, the working electrode comprising an array of boron doped diamond layer micro-electrodes, each micro-electrode having an exposed area of less than a hundred square micrometers surrounded by an electrically insulating area;
- a counter electrode on the sensing surface, an edge of the counter electrode lying at least one millimeter above the sensing surface.

Herein the use of a working electrode with small exposed areas of BDD and a raised counter electrode provides for reliable measurements at a high measurement repetition rate. In addition, a reference electrode may be provided on the surface, for example as input in a potentiostat circuit for controlling through the working electrode by adjusting its potential. Preferably, the edge of the counter electrode is not more than five millimeter above the sensing surface. The device provides for increased safety and strength issue, reduces debris collection at the sensor surface.

In an embodiment the counter electrode has a convex surface within its peripheral edge. This further contributes to a high reliable measurement repetition rate.

In an embodiment, the working electrode comprises a boron doped diamond layer and an insulation layer on the boron doped diamond layer, with an array of openings in the insulation layer, the openings exposing the boron doped diamond layer, each opening in the array having an area of less than a hundred square micrometer. This helps to increase the measurement repetition rate. The distance between edges of the openings is between forty and a hundred and fifty micrometers. This further increase the measurement repetition rate.

In an embodiment a combination of boron doped diamond layer micro-electrodes and a platinum counter electrode is used thus providing for a wide operating range.

In an embodiment the device comprises a built-in temperature sensor adjacent to the sensing surface (e.g. between one and ten millimeter from the surface. This allows for compensation for temperature sensitivity of the measurements, and to provide accurate measurements across a wide range of temperatures.

An electrochemical sensor system is provided with the electrochemical sensor device, a water flow conduit and a control circuit coupled to the working electrode and the counter electrode, the sensing surface of the electrochemical sensor device lying in the conduit, with the sensing surface at least partly protruding from a wall of the conduit. This increases the speed of bubble removal. Preferably the sensing surface obliquely faces the flow direction of the conduit. For example the angle between a normal from the surface and the inverse of the average flow direction is between twenty and seventy degrees.

According to independent claim 9, a method of performing measurements using an electrochemical sensor device in a flowing liquid is also provided, said method comprising using an electrochemical sensor device according to the invention, exposed to water flow. In a preferred embodiment, voltammetry method is provided using said sensor, exposed to water flow during the anodic stripping voltammetry. In an embodiment the sensor surface is positioned in a direction at an angle of at least forty five degrees to a normal of the sensing surface.

### Brief description of the drawing

These and other objects and advantageous aspects will become apparent from a description of exemplary embodiments with reference to the following figures.
Figure 1 illustrates anodic stripping voltammetry
Figure 2 shows an electrochemical sensor device
Figure 3 shows a cross section of a part of working electrode
Figure 4 shows a cross section of counter electrode
Figure 5 shows a measuring system

### Detailed description of exemplary embodiments

Figure 2 shows an electrochemical sensor device. The device has a cylindrical housing 20, with a sensing surface 22 perpendicular to the cylinder axis. A working electrode 24, a counter electrode 26 and a reference electrode 28 are located on sensing surface 22. Sensing surface 22 itself is of an electrically insulating material between the electrodes.

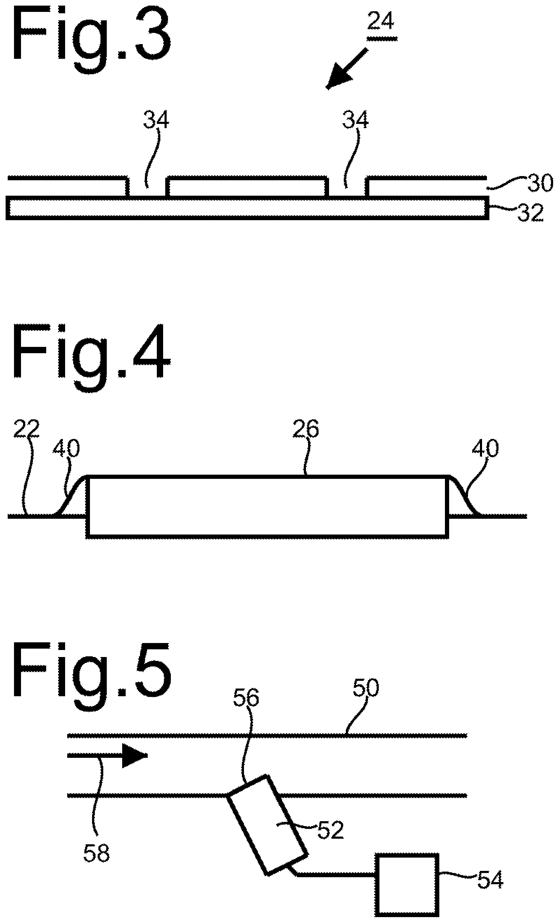

Figure 3 shows a cross section of a part of working electrode 24. Working electrode 24 comprises a boron doped diamond (BDD) layer 30 and an electrically insulating layer 30 on top of BDD layer 32. Openings 34 in electrically insulating layer 30 locally expose BDD layer 32. Methods of manufacturing such an electrode are known per se, e.g. from the cited article by C.A. Rusinek et al. Photolithography may be used to create openings 34 of micrometer size. In an embodiment electrically insulating layer 30 has a thickness of one micrometer, openings 34 having circular shapes and a diameter in a range between one or two micrometer and twelve micrometer or up to twenty five micrometer and more preferably between one and four or two and four micrometer. In an embodiment working electrode 24 comprises an array of such openings 34, e.g. a hexagonal array or other two dimensional array containing e.g. more than a thousand and preferably more than two thousand or more than five thousand openings 34, e.g. with a distance of fifty micrometers between the openings. Instead of circular shaped openings 34, openings 34 with different shapes may be used, preferably with areas of less than two hundred or a hundred square micrometers, and more preferably less than twenty square micrometers, for example more than one or more than three square micrometers.

Figure 4 shows a cross section of counter electrode 26. Counter electrode 26 is made of an electrically conducting material such as platinum over its entire surface. The edge of counter electrode 26 is raised above the sensing surface 22 of the housing, and according to the invention, by at least one millimeter, e.g. between one and five millimeter or two and five millimeter. A ring 40 of filler material such as epoxy resin may be present around counter electrode 26 to avoid exposing sharp edges and seal the joins.

Figure 5 shows a measuring system with a water conduit 50, a sensor 52 of the type shown in figures 2-4 and a control circuit. The electrodes of the sensor may be connected to a conventional potentiostat circuit 54 e.g. in a control circuit 54. The potentiostat circuit 54 is configured to control the potential difference between working electrode 24 and reference electrode 28 by means of adjustment of the current through counter electrode 26. Current through reference electrode 28 is not needed.

As illustrated in figure 5, the sensing surface 56 obliquely faces the direction of flow 58 of the liquid in the conduit. This promotes the removal of bubbles. The angle between a normal from the surface and the inverse of the average flow direction 58 may be between twenty and seventy degrees for example.

In an embodiment, reference electrode 28 comprises a first interface junction and a second interface junction. Preferably, the reference electrode comprises of two interface junctions with the junction between the reference electrode and the sensing surface being made of porous glass or ceramic. Reference electrode 28 may be a double junction Ag/AgCl electrode with a saturated KCl solution reservoir. In other embodiments the current through the working electrode and the counter electrode and/or the voltage difference between these electrodes may be controlled without using a reference electrode. In this case the device need not contain a reference electrode.

In operation, water flows over sensing surface 22. During the flow, anodic stripping voltammetry is performed, wherein the potential difference between working electrode 24 and the other electrodes is negative in the collection time interval, to obtain deposition on working electrode 24. Subsequently a potential scan is performed wherein the potential differences are reversed in order to remove the deposition from the working electrode 24.

Several factors can limit the rate at which rate at which the measurements can be repeated using electrochemical sensor devices. First of all, the repetition rate depends on the duration of collection time interval 10. The accuracy of the measurements depends on the amount of material that is deposited in this time interval 10. As long as the electrodes do not become saturated, the amount of deposited material is proportional to the duration of the collection time interval 10. Compared to a large electrode with the size of the array of micro-electrodes, the use of an array of micro-electrodes provides for an increased speed of deposition because less diffusion distance is needed over the electrodes. As a result a collection time interval 10 or shorter duration is sufficient to realize a given accuracy. Similarly, the release of ions during scanning is less affected by diffusion effects. By making the size of openings 34 small, e.g. two micrometer or in a range of one to ten and more preferably one to five micrometer, the limitation of such effects on the repetition rate can be reduced.

A second effect that limits the rate at which measurements can be repeated is due to hydrogen gas formation due to electrolysis of water at the electrodes. At working electrode 24 hydrogen gas formation can be kept low by means of voltage control by the potentiostat. However, hydrogen formation on counter electrode 26 is more difficult to control. Electrical contact between the water and the counter electrode 26 can be lost due to the presence or intercession of a hydrogen bubble over the counter electrode. Failure to remove such a bubble can s stop future measurement, or at least cause a delay between the times at which successive scans can be performed.

This problem is reduced by using a counter electrode 26 that has edges raised above sensing surface 22. As a result of this, turbulence or at least more turbulence arises in the water flow along the surface of counter electrode 26. The turbulence reduces bubble growth over counter electrode 26 and removes hydrogen from sensing surface 22 into the water flow. As a result, the anodic stripping voltammetry can be reliably repeated, for example to monitor a silver concentration in the liquid, and/or the concentration of other ions. Even if the water itself stands still, motion of the electrochemical sensor device relative to the water may cause sufficient turbulence. When the electrochemical sensor device is used as a hand-held device, such motion can easily be realized and may even be unavoidable. It has been found that the buildup of bubbles is reduced at the CE when working the device is used in a beaker with still water.

Although this effect has been explained for anodic stripping voltammetry, it should be realized that similar improvements can be obtained in other forms of measurement using an electrochemical sensor device in a flowing liquid. Although an embodiment is described wherein the raised edge is used to create or increase turbulence in the water flow along the surface of counter electrode 26, it should be realized that other measures can be used to increase this turbulence. Such as pins extending from sensing surface 22 upstream adjacent counter electrode 26, or around counter electrode 26. Preferably concave parts in the counter electrode 26 are avoided, to prevent safe areas for bubbles. Counter electrode 26 may have a flat or convex surface. A convex surface shape helps to increase turbulence at the electrode tip just where it is needed most. For example, the surface of counter electrode 26 may have a constant radius of curvature within its peripheral edge.

As in the prior art, the ion concentration(s) can be measured from the size of the current peaks. It has been found that the relation between the size and the concentration depends on temperature. In an embodiment the device comprises a built-in temperature sensor adjacent the sensing surface (e.g. between two and ten millimeter from the surface. This allows for compensation for temperature sensitivity of the measurements, and to provide accurate measurements across a wide range of temperatures. The relation between the peak size and concentration may be calibrated using measurements with known concentration and temperatures.

## Claims

1. An electrochemical sensor device comprising
- a sensing surface (22);
- a working electrode (24) on the sensing surface (22), the working electrode comprising an array of boron doped diamond layer micro-electrodes, each micro-electrode having an exposed area surrounded by an electrically insulating area;
- a counter electrode (26) on the sensing surface (22), the electrochemical sensor device being **characterized in that** the exposed area is less than a hundred square micrometer and an edge of the counter electrode lies at least one millimeter above the sensing surface (22).

2. An electrochemical sensor device according to claim 1, wherein the counter electrode (26) has a convex surface.

3. An electrochemical sensor device according to any of the preceding claims, wherein the working electrode (24) comprises a boron doped diamond layer (32) and an insulation layer (30) on the boron doped diamond layer, with an array of openings (34) in the insulation layer (30), the openings exposing the boron doped diamond layer (32), each opening in the array having an area of less than two hundred and preferably less than a hundred square micrometers.

4. An electrochemical sensor device according to claim 3, wherein a distance between edges of the openings is between forty and a hundred and fifty micrometer.

5. An electrochemical sensor device according to any of the preceding claims, wherein the counter electrode is a platinum electrode.

6. An electrochemical sensor device according to any of the preceding claims, comprising a built-in temperature sensor adjacent the sensing surface.

7. An electrochemical sensor system comprising an electrochemical sensor device according to any of the preceding claims, a water flow conduit (50) and a control circuit (54) coupled to the working electrode (24) and the counter electrode (26), the sensing surface (22) of the electrochemical sensor device lying in the conduit (50), with the sensing surface (22) at least party protruding from a wall of the conduit.

8. An electrochemical sensor system according to claim 7, wherein the sensing surface obliquely faces the flow direction of the conduit

9. A method of performing measurements using an electrochemical sensor device in a flowing liquid, comprising using an electrochemical sensor device according to any of claims 1-6, exposed to water flow.

10. A method according to claim 9, wherein the measurements are performed using scanning voltammetry, such as anodic stripping voltammetry.

11. A method according to claim 9 or 10, wherein the sensing surface obliquely faces the water flow direction during the anodic stripping voltammetry.

## Patentansprüche

1. Elektrochemische Sensorvorrichtung die umfasst
- eine Erfassungsfläche (22);
- eine Arbeitselektrode (24) auf der Erfassungsfläche (22), wobei die Arbeitselektrode eine Anordnung von bor-dotierten Diamantschicht-Mikroelektroden umfasst, wobei jede Mikroelektrode einen freiliegenden Bereich aufweist, der von einem elektrisch isolierenden Bereich umgeben ist;
- eine Gegenelektrode (26) auf der Erfassungsfläche (22), wobei die elektrochemische Sensorvorrichtung **dadurch gekennzeichnet ist, dass** die freiliegende Fläche weniger als hundert Quadratmikrometer beträgt und ein Rand der Gegenelektrode wenigstens einen Millimeter über der Erfassungsfläche (22) liegt.

2. Elektrochemische Sensorvorrichtung nach Anspruch 1, wobei die Gegenelektrode (26) eine konvexe Oberfläche aufweist.

3. Elektrochemische Sensorvorrichtung nach einem der vorhergehenden Ansprüche, wobei die Arbeitselektrode (24) eine bor-dotierte Diamantschicht (32) und eine Isolierschicht (30) auf der bor-dotierten Diamantschicht umfasst, mit einer Anordnung von Öffnungen (34) in der Isolierschicht (30), wobei die Öffnungen die bor-dotierte Diamantschicht (32) freilegen, wobei jede Öffnung in der Anordnung eine Fläche von weniger als zweihundert und vorzugsweise weniger als hundert Quadratmikrometer aufweist.

4. Elektrochemische Sensorvorrichtung nach Anspruch 3, wobei der Abstand zwischen den Rändern der Öffnungen zwischen vierzig und einhundertfünfzig Mikrometer beträgt.

5. Elektrochemische Sensorvorrichtung nach einem der vorhergehenden Ansprüche, wobei die Gegenelektrode eine Platinelektrode ist.

6. Elektrochemische Sensorvorrichtung nach einem der vorhergehenden Ansprüche, die einen eingebauten Temperatursensor in der Nähe der Erfassungsfläche umfasst.

7. Elektrochemisches Sensorsystem mit einer elektrochemischen Sensorvorrichtung nach einem der vorhergehenden Ansprüche, einer Wasserdurchflussleitung (50) und einer mit der Arbeitselektrode (24) und der Gegenelektrode (26) gekoppelten Steuerschaltung (54), wobei die Erfassungsfläche (22) der elektrochemischen Sensorvorrichtung in der Leitung (50) liegt, wobei die Erfassungsfläche (22) wenigstens teilweise aus einer Wand der Leitung herausragt.

8. Elektrochemisches Sensorsystem nach Anspruch 7, wobei die Erfassungsfläche schräg zur Flussrichtung der Leitung steht.

9. Verfahren zur Durchführung von Messungen unter Verwendung einer elektrochemischen Sensorvorrichtung in einer fließenden Flüssigkeit, umfassend die Verwendung einer elektrochemischen Sensorvorrichtung nach einem der Ansprüche 1 bis 6, die einem Wasserfluss ausgesetzt ist.

10. Verfahren nach Anspruch 9, wobei die Messungen unter Verwendung der Abtast-Voltammetrie, wie der anodischen Stripping-Voltammetrie, durchgeführt werden.

11. Verfahren nach Anspruch 9 oder 10, wobei die Erfassungsfläche während der anodischen Stripping-Voltammetrie schräg zur Wasserflussrichtung ausgerichtet ist.

## Revendications

1. Dispositif capteur électrochimique comprenant
- une surface de détection (22) ;
- une électrode de travail (24) sur la surface de détection (22), l'électrode de travail comprenant un réseau de microélectrodes à couche de diamant dopée au bore, chaque microélectrode ayant une aire exposée encerclée par une aire électriquement isolante ;
- une contre-électrode (26) sur la surface de détection (22),
le dispositif capteur électrochimique étant **caractérisé en ce que** l'aire exposée est inférieure à cent micromètres carrés et un bord de la contre-électrode se situe au moins un millimètre au-dessus de la surface de détection (22).

2. Dispositif capteur électrochimique selon la revendication 1, dans lequel la contre-électrode (26) possède une surface convexe.

3. Dispositif capteur électrochimique selon l'une quelconque des revendications précédentes, dans lequel l'électrode de travail (24) comprend une couche de diamant dopée au bore (32) et une couche d'isolation (30) sur la couche de diamant dopée au bore, avec un réseau d'ouvertures (34) dans la couche d'isolation (30), les ouvertures exposant la couche de diamant dopée au bore (32), chaque ouverture dans le réseau ayant une aire inférieure à deux cents et de préférence inférieure à cent micromètres carrés.

4. Dispositif capteur électrochimique selon la revendication 3, dans lequel une distance entre bords des ouvertures est entre quarante et cent cinquante micromètres.

5. Dispositif capteur électrochimique selon l'une quelconque des revendications précédentes, dans lequel la contre-électrode est une électrode de platine.

6. Dispositif capteur électrochimique selon l'une quelconque des revendications précédentes, comprenant un capteur de température intégré adjacent à la surface de détection.

7. Système capteur électrochimique comprenant un dispositif capteur électrochimique selon l'une quelconque des revendications précédentes, un conduit (50) d'écoulement d'eau et un circuit de commande (54) couplé à l'électrode de travail (24) et à la contre-électrode (26), la surface de détection (22) du dispositif capteur électrochimique étant située dans le conduit (50), la surface de détection (22) faisant au moins partiellement saillie à partir d'une paroi du conduit.

8. Système capteur électrochimique selon la revendication 7, dans lequel la surface de détection fait face de manière oblique à la direction d'écoulement du conduit.

9. Procédé de réalisation de mesures à l'aide d'un dispositif capteur électrochimique dans un liquide en écoulement, comprenant l'utilisation d'un dispositif capteur électrochimique selon l'une quelconque des revendications 1 à 6, exposé à un écoulement d'eau.

10. Procédé selon la revendication 9, dans lequel les mesures sont réalisées à l'aide d'une voltampérométrie à balayage, telle que la voltampérométrie par strippage anodique.

11. Procédé selon la revendication 9 ou 10, dans lequel la surface de détection fait face de manière oblique à la direction d'écoulement d'eau pendant la voltampérométrie par strippage anodique.
